# EUROPEAN PATENT APPLICATION

(11) **EP 3 434 990 A1**
(43) Date of publication of application: **30.01.2019**
(21) Application number: 16895423.8
(22) Date of filing: 24.03.2016
(51) Int. Cl.: F24F 7/08

(54) **HEAT-EXCHANGING VENTILATION FAN**

(71) Applicant: Mitsubishi Electric Corporation, Chiyoda-ku Tokyo 100-8310 (JP)
(72) Inventor: SUGIHARA, Toshihide, Tokyo 100-8310 (JP); AOKI, Hiroki, Tokyo 100-8310 (JP)
(74) Representative: Pfenning, Meinig & Partner mbB
(86) International application number: PCT/JP2016/059498
(87) International publication number: WO 2017/163387

(57) **Abstract**

A heat-exchanging ventilator includes a housing (41) having an outside-air inlet port (8), an outside-air outlet port (1b), a discharge-air inlet port (1a), a discharge-air outlet port (7), a supply-air pathway (33), and a discharge-air pathway (32). The heat-exchanging ventilator also includes: a supply-air fan (3) that generates a supply airflow in the supply-air pathway (33); a discharge-air fan (2) that generates a discharge airflow in the discharge-air pathway (32), and a heat exchanger (5) that allows heat-exchanging between the supply airflow and the discharge airflow. The outside-air inlet port (8) and the discharge-air outlet port (7) are formed in a back face (6) of the housing (41). The heat-exchanging ventilator includes: a surrounding wall (34) provided on the back face (6) and surrounding the outside-air inlet port (8) and the discharge-air outlet port (7) together; a housing-side partition portion (10) partitioning a region surrounded by the surrounding wall (34) into a region in which the outside-air inlet port (8) is formed and a region in which the discharge-air outlet port (7) is formed; and a facing plate covering an inner side of the surrounding wall (34).

## Description

### Field

The present invention relates to a heat-exchanging ventilator that provides ventilation while allowing heat-exchanging between air from inside a room and air from outside the room.

### Background

Heat-exchanging ventilators that provide ventilation while allowing heat to be exchanged between air from inside a room and air from outside the room include a wall-mounted type that is mounted on an exterior wall of a building. Wall-mounted-type heat-exchanging ventilators include a double-pipe-type heat-exchanging ventilator disclosed in Patent Literature 1 and a single-pipe-type heat-exchanging ventilator disclosed in Patent Literature 2.

The double-pipe-type heat-exchanging ventilator includes, separately in a surface facing a wall of a building, an outside-air inlet port for supplying air from outside a room to the inside of the room and a discharge-air outlet port for discharging air from inside the room to the outside of the room. Two openings are built into the building wall and they line up with the outside-air-inlet port and the discharge-air-outlet port, respectively.

In contrast, the single-pipe-type heat-exchanging ventilator includes an outside-air inlet port and a discharge-air outlet port that are combined in a surface facing a wall of a building. An opening is also built into the building wall and it lines up with the combined outside-air inlet port and discharge-air outlet port. The single-pipe-type heat-exchanging ventilator includes a pipe that passes through the opening and is partitioned internally to prevent mixing of air from inside a room and air from outside the room.

### Citation List

### Patent Literature

Patent Literature 1: Japanese Patent Application Laid-open No. 10-103734
Patent Literature 2: Japanese Patent Application Laid-open No. 4-20733

### Summary

### Technical Problem

Conventional heat-exchanging ventilators include the single-pipe-type heat-exchanging ventilator and the double-pipe-type heat-exchanging ventilator, which are different products and require the placement of an order for a type of heat-exchanging ventilator that matches the number of holes formed in a wall or the formation of the number of holes that matches the type of the ordered heat-exchanging ventilator. This poses a problem in that, if the wrong type of heat-exchanging ventilator is ordered or the wrong number of holes is formed in a wall, the heat-exchanging ventilator cannot be installed.

Additionally, a tooling change may be required in a manufacturing line when manufacturing single-pipe-type heat-exchanging ventilators and when manufacturing double-pipe-type heat-exchanging ventilators during a heat-exchanging ventilator manufacturing process, leading to a potential reduction in manufacturing efficiency and thus a potential increase in manufacturing costs.

Another problem is that, if both the single-pipe-type heat-exchanging ventilator and the double-pipe-type heat-exchanging ventilator are provided in the same space, coordination of appearance is difficult.

The present invention has been achieved in view of the above, and an object of the present invention is to provide a heat-exchanging ventilator usable as a single-pipe-type heat-exchanging ventilator or as a double-pipe-type heat-exchanging ventilator.

### Solution to Problem

To solve the problems described above and achieve the object described above, a heat-exchanging ventilator according to the present invention includes a housing having an outside-air inlet port, an outside-air outlet port, a discharge-air inlet port, a discharge-air outlet port, a supply-air pathway connecting the outside-air inlet port and the outside air outlet port, and a discharge-air pathway connecting the discharge-air inlet port and the discharge-air outlet port. The heat-exchanging ventilator also includes a supply-air fan, provided in the supply-air pathway, to generate a supply airflow in the supply-air pathway; a discharge-air fan, provided in the discharge-air pathway, to generate a discharge airflow in the discharge-air pathway; and a heat exchanger, provided inside the housing, to allow heat to be exchanged between the supply airflow and the discharge airflow. The outside-air inlet port and the discharge-air outlet port are formed in a back face of the housing. The heat-exchanging ventilator includes a surrounding wall provided on the back face and surrounding both the outside-air inlet port and the discharge-air outlet port; a housing-side partition portion partitioning a region surrounded by the surrounding wall into a region that the outside-air inlet port is formed in and a region that the discharge-air outlet port is formed in; and a facing plate facing the back face and covering an inner side of the surrounding wall.

### Advantageous Effects of Invention

A heat-exchanging ventilator according to the present invention produces an effect of being usable as a single-pipe-type heat-exchanging ventilator or a double-pipe-type heat-exchanging ventilator.

### Brief Description of Drawings

FIG. 1 is a sectional view illustrating a schematic configuration of a heat-exchanging ventilator according to a first embodiment of the present invention when being used as a double-pipe-type heat-exchanging ventilator.
FIG. 2 is a sectional view illustrating a schematic configuration of the heat-exchanging ventilator according to the first embodiment when being used as a single-pipe-type heat-exchanging ventilator.
FIG. 3 is a sectional view illustrating a schematic configuration of a main body included in the heat-exchanging ventilator according to the first embodiment.
FIG. 4 is a perspective view of the main body included in the heat-exchanging ventilator according to the first embodiment when observed from a back-face side of the main body.
FIG. 5 is a sectional view of a double-pipe facing plate that is used when the heat-exchanging ventilator according to the first embodiment is used as a double-pipe-type heat-exchanging ventilator.
FIG. 6 is a perspective view of the double-pipe facing plate according to the first embodiment.
FIG. 7 is a sectional view of a single-pipe facing plate that is used when the heat-exchanging ventilator according to the first embodiment is used as a single-pipe-type heat-exchanging ventilator.
FIG. 8 is a perspective view of the single-pipe facing plate according to the first embodiment.

### Description of Embodiments

An exemplary embodiment of a heat-exchanging ventilator according to the present invention is described below in detail with reference to the drawings. The present invention is not limited to the embodiment.

### First Embodiment

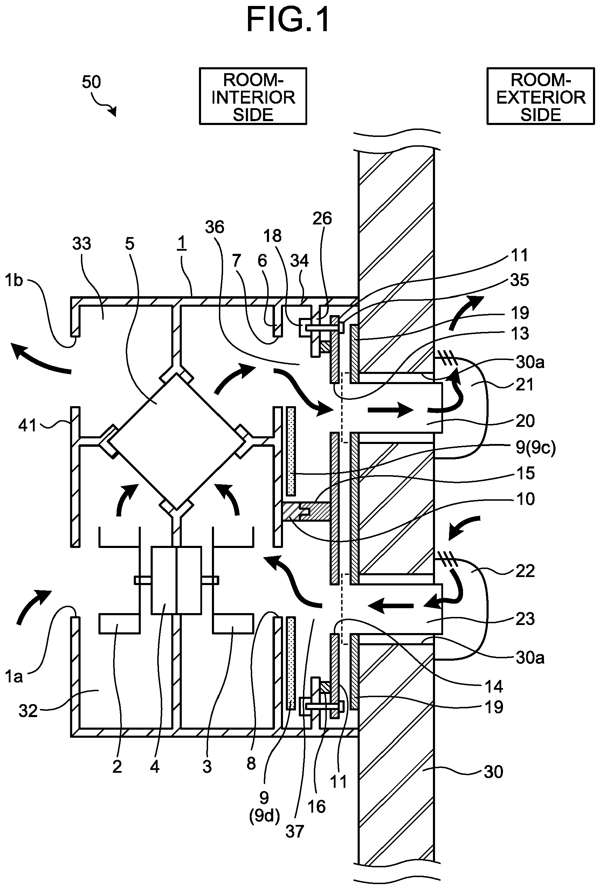

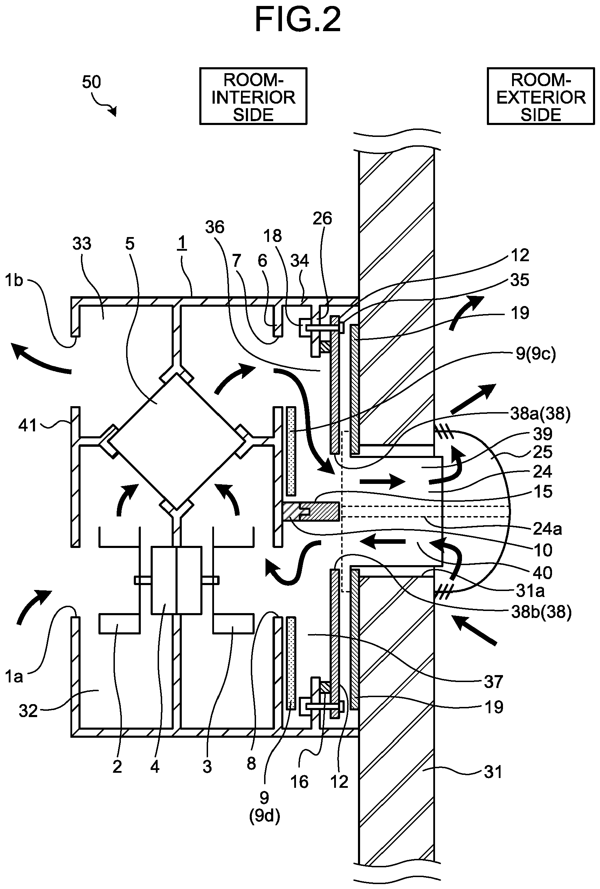

FIG. 1 is a sectional view illustrating a schematic configuration of a heat-exchanging ventilator according to a first embodiment of the present invention when it is being used as a double-pipe-type heat-exchanging ventilator. FIG. 2 is a sectional view illustrating a schematic configuration of the heat-exchanging ventilator according to the first embodiment when it is being used as a single-pipe-type heat-exchanging ventilator.

As illustrated in FIG. 1, a heat-exchanging ventilator 50 according to the first embodiment can be used as a double-pipe-type heat-exchanging ventilator that supplies and discharges air by using two holes 30a formed in a wall 30 of a building. As illustrated in FIG. 1, the heat-exchanging ventilator 50 can be used as a double-pipe-type heat-exchanging ventilator by using a main body 1 and a double-pipe facing plate 11 in combination. Arrows in FIGS. 1 and 2 represent the flow of air.

As illustrated in FIG. 2, the heat-exchanging ventilator 50 can be used also as a single-pipe-type heat-exchanging ventilator that supplies and discharges air by using a hole 31a formed in a wall 31 of a building. As illustrated in FIG. 2, the heat-exchanging ventilator 50 can be used as a single-pipe-type heat-exchanging ventilator by using the main body 1 and a single-pipe facing plate 12 in combination.

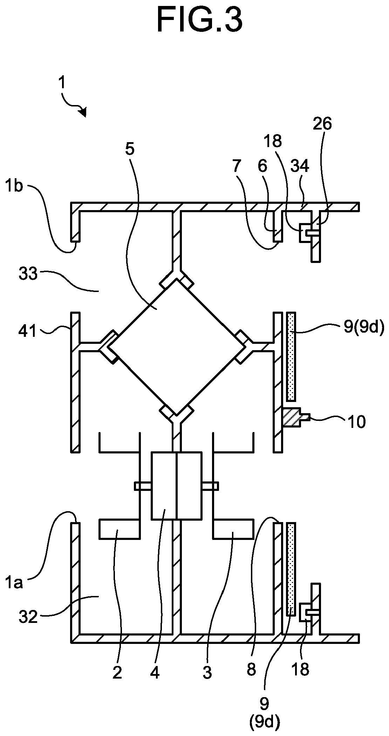

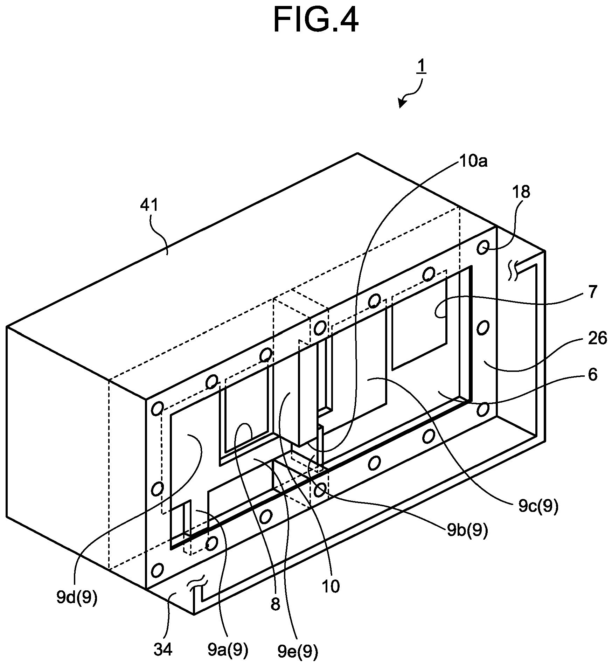

The main body 1 of the heat-exchanging ventilator 50 is described below. FIG. 3 is a sectional view illustrating a schematic configuration of the main body 1 included in the heat-exchanging ventilator 50 according to the first embodiment. FIG. 4 is a perspective view of the main body 1 included in the heat-exchanging ventilator 50 according to the first embodiment when observed from a back-face side of the main body 1.

The main body 1 includes a housing 41, a discharge-air fan 2, a supply-air fan 3, a motor 4, and a heat exchanger 5. The housing 41 is a box body having a cuboid shape. The housing 41 has, formed therein, an outside-air inlet port 8 that admits air from outside into a room inside of the housing 41; an outside-air outlet port 1b that emits the air admitted through the outside-air inlet port 8 toward the inside of the room; a discharge-air inlet port 1a that admits air from inside the room into the inside of the housing 41; and a discharge-air outlet port 7 that emits the air admitted through the discharge-air inlet port 1a toward the outside of the room.

As illustrated in FIGS. 1 and 2, the discharge-air outlet port 7 and the outside-air inlet port 8 are formed in a back face 6 of the housing 41 that is a face facing the wall 30 or 31. The discharge-air inlet port 1a and the outside-air outlet port 1b may be formed in a surface of the housing 41 that faces the inside of the room.

A supply-air pathway 33 that connects the outside-air inlet port 8 and the outside-air outlet port 1b; and a discharge-air pathway 32 that connects the discharge-air inlet port 1a and the discharge-air outlet port 7 are formed inside the housing 41. The supply-air fan 3 is provided in the supply-air pathway 33. The discharge-air fan 2 is provided in the discharge-air pathway 32. The motor 4 is provided inside the housing 41 and it rotates the supply-air fan 3 and the discharge-air fan 2.

The supply-air fan 3 is rotated by the motor 4 and generates a supply airflow that passes from the outside-air inlet port 8 toward the outside-air outlet port 1b inside the supply-air pathway 33. The discharge-air fan 2 is rotated by the motor 4 and generates a discharge airflow that passes from the discharge-air inlet port 1a toward the discharge-air outlet port 7 inside the discharge-air pathway 32.

The heat exchanger 5 is provided inside the housing 41 at intersection portions of the supply-air pathway 33 and the discharge-air pathway 32. The heat exchanger 5 has an air pathway that allows the supply airflow to pass therethrough and an air pathway that allows the discharge airflow to pass therethrough independently, allowing heat to be exchanged between the supply airflow and the discharge airflow when the airflows pass through the heat exchanger 5.

A surrounding wall 34 is provided on the back face 6 of the housing 41 and it extends toward the wall 30 or 31. The surrounding wall 34 is provided along a perimeter of the back face 6 and it surrounds both the outside-air inlet port 8 and the discharge-air outlet port 7.

A flange portion 26 is formed on an inner surface of the surrounding wall 34 at a position away from the back face 6. A screw receiving portion 18 into which a screw 35 is screwed is formed in the flange portion 26 to attach the double-pipe facing plate 11 or the single-pipe facing plate 12 with the screw 35.

A shutter body 9 that opens and closes the outside-air inlet port 8 and the discharge-air outlet port 7 is provided on the main body 1. As illustrated in FIG. 4, the shutter body 9 includes an outlet-port shutter 9c that opens and closes the discharge-air outlet port 7; an inlet-port shutter 9d that opens and closes the outside-air inlet port 8; a coupling portion 9e that couples the outlet-port shutter 9c and the inlet-port shutter 9d; and an operation portion 9a that is operated to move the shutter body 9. The shutter body 9 is moved to move the outlet-port shutter 9c and the inlet-port shutter 9d to positions that open the discharge-air outlet port 7 and the outside-air inlet port 8 and to positions that close the discharge-air outlet port 7 and the outside-air inlet port 8.

Because the outlet-port shutter 9c and the inlet-port shutter 9d are coupled by the coupling portion 9e, operating the operation portion 9a allows the outlet-port shutter 9c and the inlet-port shutter 9d to move simultaneously. Operating the operation portion 9a alone thus allows the discharge-air outlet port 7 and the outside-air inlet port 8 to open or close simultaneously. The outlet-port shutter 9c and the inlet-port shutter 9d may be configured so as to be moved separately, in place of the configuration that couples the outlet-port shutter 9c and the inlet-port shutter 9d.

A housing-side partition portion 10 that partitions a region surrounded by the surrounding wall 34 into a region in which the outside-air inlet port 8 is formed and a region in which the discharge-air outlet port 7 is formed is provided on the back face 6. A cutout 10a is formed in the housing-side partition portion 10 to prevent interference with the coupling portion 9e, and it is included in the shutter body 9 and straddles the housing-side partition portion 10. The coupling portion 9e includes a cutout blocking portion 9b that blocks the cutout 10a when the discharge-air outlet port 7 and the outside-air inlet port 8 are open.

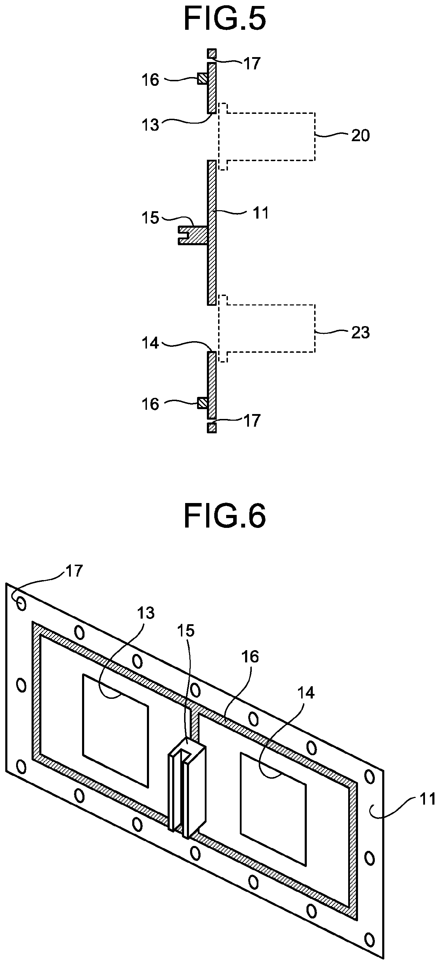

The double-pipe facing plate 11 is described next. FIG. 5 is a sectional view of the double-pipe facing plate 11, which is used when the heat-exchanging ventilator 50 according to the first embodiment is used as a double-pipe-type heat-exchanging ventilator. FIG. 6 is a perspective view of the double-pipe facing plate 11 according to the first embodiment.

The double-pipe facing plate 11 is a plate-like member that is fixed to the flange portion 26 included in the main body 1 and that faces the back face 6. The double-pipe facing plate 11 is fixed to the flange portion 26 with the screw 35, which passes through a screw hole 17, so as to block an inner side of the surrounding wall 34, which has a tubular shape. A gasket 16 is provided between the double-pipe facing plate 11 and the flange portion 26 to prevent the supply airflow and the discharge airflow from leaking.

A plate-side partition portion 15 is provided on a surface of the double-pipe facing plate 11 that faces the back face 6. As illustrated in FIG. 1, the plate-side partition portion 15 contacts the housing-side partition portion 10 on the main body 1 side. The plate-side partition portion 15 and the housing-side partition portion 10 are in contact with each other, partitioning a space surrounded by the back face 6, the surrounding wall 34, and the double-pipe facing plate 11 into an inlet-port-side space 37 that communicates with the outside-air inlet port 8 and a discharge-port-side space 36 that communicates with the discharge-air outlet port 7. The plate-side partition portion 15 and the housing-side partition portion 10 have ends having shapes that connect with each other. While the plate-side partition portion 15 and the housing-side partition portion 10 are configured to make direct contact with each other in the first embodiment, the plate-side partition portion 15 and the housing-side partition portion 10 may be configured to allow another element to be interposed therebetween.

The double-pipe facing plate 11 has, formed therein separately, an inlet-port-side opening 14 that communicates with the inlet-port-side space 37 and a discharge-port-side opening 13 that communicates with the discharge-port-side space 36. As illustrated in FIG. 1, a position in which the inlet-port-side opening 14 is formed and a position in which the discharge-port-side opening 13 is formed line up with those of the holes 30a, which are formed in the wall 30, when the surrounding wall 34 of the main body 1 is brought into contact with the wall 30.

A discharge pipe 20 and a supply pipe 23 are inserted in the holes 30a, which are formed in the wall 30. The discharge pipe 20 and the supply pipe 23 are fixed to the wall 30 using a main-body mounting plate 19 that is attached to a room-interior side of the wall 30. A discharge hood 21 is attached on a room-exterior side of the discharge pipe 20. A supply hood 22 is attached on a room-exterior side of the supply pipe 23.

As illustrated in FIG. 1, fixing the main body 1, on which the double-pipe facing plate 11 is attached, to the wall 30 via the main-body mounting plate 19 allows the discharge-air pathway 32 to communicate with the outside of the room via the discharge pipe 20 and the discharge hood 21 and allows the supply-air pathway 33 to communicate with the outside of the room via the supply pipe 23 and the supply hood 22. Rotating the discharge-air fan 2 enables air from inside the room to be discharged to the outside of the room through the discharge-air inlet port 1a, the discharge-air pathway 32, the heat exchanger 5, the discharge-air outlet port 7, the discharge-port-side space 36, the discharge-port-side opening 13, the discharge pipe 20, and the discharge hood 21. Additionally, rotating the supply-air fan 3 enables air from outside the room to be supplied to the inside of the room through the supply hood 22, the supply pipe 23, the inlet-port-side opening 14, the inlet-port-side space 37, the outside-air inlet port 8, the supply-air pathway 33, the heat exchanger 5, and the outside-air outlet port 1b.

As described above, the heat-exchanging ventilator 50 can be used as a double-pipe-type heat-exchanging ventilator by attaching the double-pipe facing plate 11 to the flange portion 26 of the main body 1.

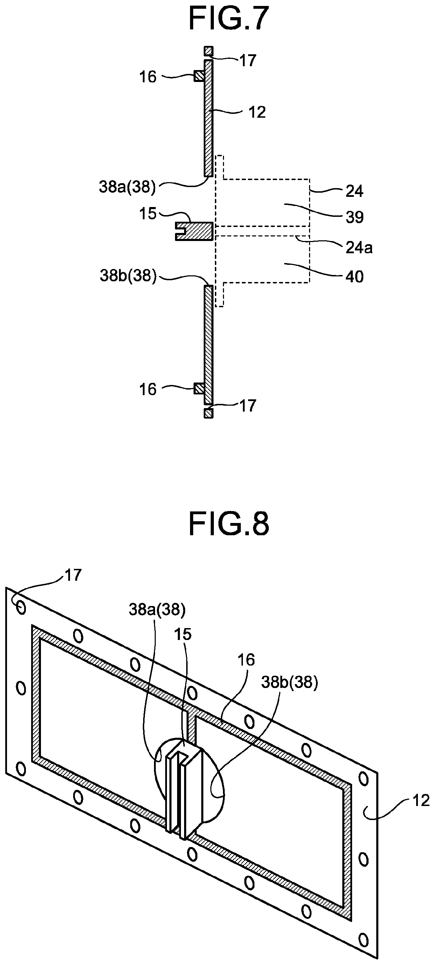

The single-pipe facing plate 12 is described next. FIG. 7 is a sectional view of the single-pipe facing plate 12, which is used when the heat-exchanging ventilator 50 according to the first embodiment is used as a single-pipe-type heat-exchanging ventilator. FIG. 8 is a perspective view of the single-pipe facing plate 12 according to the first embodiment.

The single-pipe facing plate 12 is a plate-like member that is fixed to the flange portion 26 included in the main body 1 and that faces the back face 6. The single-pipe facing plate 12 is fixed to the flange portion 26 with the screw 35, which passes through the screw hole 17, so as to block the inner side of the surrounding wall 34, which has a tubular shape. The gasket 16 is provided between the single-pipe facing plate 12 and the flange portion 26 to prevent the supply airflow and the discharge airflow from leaking.

The plate-side partition portion 15 is provided on a surface of the single-pipe facing plate 12 that faces the back face 6. As illustrated in FIG. 2, the plate-side partition portion 15 contacts the housing-side partition portion 10 on the main body 1 side. The plate-side partition portion 15 and the housing-side partition portion 10 are in contact with each other and they partition a space surrounded by the back face 6, the surrounding wall 34, and the single-pipe facing plate 12 into the inlet-port-side space 37, which communicates with the outside-air inlet port 8, and the discharge-port-side space 36, which communicates with the discharge-air outlet port 7. The plate-side partition portion 15 and the housing-side partition portion 10 have ends having shapes that connect with each other. While the plate-side partition portion 15 and the housing-side partition portion 10 are configured to make direct contact with each other in the first embodiment, the plate-side partition portion 15 and the housing-side partition portion 10 may be configured to allow another element to be interposed therebetween.

The single-pipe facing plate 12 has an opening 38 that straddles the inlet-port-side space 37 and the discharge-port-side space 36. The plate-side partition portion 15 thus crosses the opening 38. One side of the opening 38 with respect to the plate-side partition portion 15 is an inlet-port-side opening 38b that communicates with the inlet-port-side space 37, and the other side of the opening 38 with respect to the plate-side partition portion 15 is a discharge-port-side opening 38a that communicates with the discharge-port-side space 36. As illustrated in FIG. 2, a position in which the opening 38 is formed lines up with that of the hole 31a, which is formed in the wall 31, when the surrounding wall 34 of the main body 1 is brought into contact with the wall 31.

A supply/discharge pipe 24 is inserted in the hole 31a, which is formed in the wall 31. The supply/discharge pipe 24 is fixed to the wall 31 using the main-body mounting plate 19, which is attached to the room-interior side of the wall 31. A supply/discharge hood 25 is attached on the room-exterior side of the supply/discharge pipe 24. A partition plate 24a that contacts the plate-side partition portion 15 of the single-pipe mounting plate 12 is provided inside the supply/discharge pipe 24, partitioning the inside of the supply/discharge pipe 24 into a supply-airflow path 40 that allows the supply airflow to pass therethrough and a discharge-airflow path 39 that allows the discharge airflow to pass therethrough. Additionally, the supply/discharge hood 25 can admit or emit the supply airflow and the discharge airflow separately.

As illustrated in FIG. 2, fixing the main body 1, on which the single-pipe facing plate 12 is attached, to the wall 31 via the main-body mounting plate 19 allows the discharge-air pathway 32 to communicate with the outside of the room via the discharge-airflow path 39 of the supply/discharge pipe 24 and the supply/discharge hood 25 and allows the supply-air pathway 33 to communicate with the outside of the room via the supply-airflow path 40 of the supply/discharge pipe 24 and the supply/discharge hood 25. Rotating the discharge-air fan 2 thus enables air from inside the room to be discharged to the outside of the room through the discharge-air inlet port 1a, the discharge-air pathway 32, the heat exchanger 5, the discharge-air outlet port 7, the discharge-port-side space 36, the discharge-port-side opening 38a, the discharge-airflow path 39, and the supply/discharge hood 25. Additionally, rotating the supply-air fan 3 enables air from outside the room to be supplied to the inside of the room through the supply/discharge hood 25, the supply-airflow path 40, the inlet-port-side opening 38b, the inlet-port-side space 37, the outside-air inlet port 8, the supply-air pathway 33, the heat exchanger 5, and the outside-air outlet port 1b.

As described above, the heat-exchanging ventilator 50 can be used as a single-pipe-type heat-exchanging ventilator by attaching the single-pipe facing plate 12 to the flange portion 26 of the main body 1.

The heat-exchanging ventilator 50 described above can be used as a single-pipe-type heat-exchanging ventilator or a double-pipe-type heat-exchanging ventilator by simply changing the facing plate that is attached to the flange portion 26 between the double-pipe facing plate 11 and the single-pipe facing plate 12. The main body 1heat-exchanging ventilator can have a common usage as a single-pipe-type heat-exchanging ventilator and as a double-pipe-type heat-exchanging ventilator.

If the wrong type of heat-exchanging ventilator is ordered or the wrong number of holes is formed in a wall, the heat-exchanging ventilator 50 can be installed by exchanging the facing plates 11 and 12.

Additionally, the main body 1 is now a common body and therefore the need for a tooling change is eliminated in the manufacturing line for the main body 1 when manufacturing single-pipe-type heat-exchanging ventilators and manufacturing double-pipe-type heat-exchanging ventilators during a manufacturing process of the heat-exchanging ventilator 50; thus, manufacturing efficiency can be improved and manufacturing costs can be reduced.

Additionally, if both the single-pipe-type heat-exchanging ventilator and the double-pipe-type heat-exchanging ventilator are provided in the same space, coordination of the appearances is possible since the main body 1, which is exposed to the inside of a room, is common.

The configurations in the embodiment described above represent some examples of the present invention, and they can be combined with other publicly known techniques and partially omitted or modified without departing from the spirit of the present invention.

### Reference Signs List

1 main body; 1a discharge-air inlet port; 1b outside-air outlet port; 2 discharge-air fan; 3 supply-air fan; 4 motor; 5 heat exchanger; 6 back face; 7 discharge-air outlet port; 8 outside-air inlet port; 9 shutter body; 9a operation portion; 9b cutout blocking portion; 9c outlet-port shutter; 9d inlet-port shutter; 9e coupling portion; 10 housing-side partition portion; 10a cutout; 11 double-pipe facing plate; 12 single-pipe facing plate; 13 discharge-port-side opening; 14 inlet-port-side opening; 15 plate-side partition portion; 16 gasket; 17 screw hole; 18 screw receiving portion; 19 main-body mounting plate; 20 discharge pipe; 21 discharge hood; 22 supply hood; 23 supply pipe; 24 supply/discharge pipe; 24a partition plate; 25 supply/discharge hood; 26 flange portion; 30, 31 wall; 30a, 31a hole; 32 discharge-air pathway; 33 supply-air pathway; 34 surrounding wall; 35 screw; 36 discharge-port-side space; 37 inlet-port-side space; 38 opening; 38a discharge-port-side opening; 38b inlet-port-side opening; 39 discharge-airflow path; 40 supply-airflow path; 41 housing; 50 heat-exchanging ventilator.

## Claims

1. A heat-exchanging ventilator, comprising:
a housing having
an outside-air inlet port to admit air from outside a room into an inside of the housing,
an outside-air outlet port to emit the air admitted through the outside-air inlet port toward an inside of the room,
a discharge-air inlet port to admit air from inside the room into the inside of the housing,
a discharge-air outlet port to emit the air admitted through the discharge-air inlet port toward an outside of the room,
a supply-air pathway connecting the outside-air inlet port and the outside-air outlet port, and
a discharge-air pathway connecting the discharge-air inlet port and the discharge-air outlet port;
a supply-air fan provided in the supply-air pathway and generating a supply airflow that passes inside the supply-air pathway from the outside-air inlet port toward the outside-air outlet port;
a discharge-air fan provided in the discharge-air pathway and generating a discharge airflow that passes inside the discharge-air pathway from the discharge-air inlet port toward the discharge-air outlet port; and
a heat exchanger
provided inside the housing and
exchanging heat between the supply airflow and the discharge airflow,
wherein the outside-air inlet port and the discharge-air outlet port are formed in a back face of the housing, and
the heat-exchanging ventilator further comprises:
a surrounding wall
provided on the back face and
surrounding the outside-air inlet port and the discharge-air outlet port together;
a housing-side partition portion
provided on the back face and
partitioning a region surrounded by the surrounding wall into a region in which the outside-air inlet port is formed and a region in which the discharge-air outlet port is formed; and
a facing plate
facing the back face and
covering an inner side of the surrounding wall.

2. The heat-exchanging ventilator according to claim 1, wherein
the facing plate has a plate-side partition portion coupled to the housing-side partition portion,
the plate-side partition portion partitioning a space surrounded by the back face, the surrounding wall, and the facing plate into an inlet-port-side space communicating with the outside-air inlet port and a discharge-port-side space communicating with the discharge-air outlet port, and
the facing plate has, separately,
an inlet-port-side opening communicating with the inlet-port-side space and
a discharge-port-side opening communicating with the discharge-port-side space.

3. The heat-exchanging ventilator according to claim 1, wherein
the facing plate has a plate-side partition portion coupled to the housing-side partition portion,
the plate-side partition portion partitioning a space surrounded by the back face, the surrounding wall, and the facing plate into an inlet-port-side space communicating with the outside-air inlet port and a discharge-port-side space communicating with the discharge-air outlet port, and
the facing plate has an opening straddling the inlet-port-side space and the discharge-port-side space.

4. The heat-exchanging ventilator according to claim 2 or 3, wherein
the housing-side partition portion and the plate-side partition portion
connect with each other and
partition the space surrounded by the back face, the surrounding wall, and the facing plate into the inlet-port-side space and the discharge-port-side space.

5. The heat-exchanging ventilator according to claim 1, further comprising:
an inlet-port shutter to open and close the outside-air inlet port; and
an outlet-port shutter to open and close the discharge-air outlet port.
